# EUROPÄISCHE PATENTSCHRIFT

(11) **EP 3 062 003 B1**
(45) Veröffentlichungstag und Bekanntmachung des Hinweises auf die Patenterteilung: **31.05.2017**
(21) Anmeldenummer: 15156605.6
(22) Anmeldetag: 25.02.2015
(51) Int. Cl.: F16K 11/078, F16K 27/04

(54) **Einhandhebelkartusche**
Single hand lever cartridge
Cartouche de mitigeur

(43) Veröffentlichungstag der Anmeldung: 31.08.2016
(73) Patentinhaber: Flühs Drehtechnik GmbH, 58515 Lüdenscheid (DE)
(72) Erfinder: Lange, Lutz, 58511 Lüdenscheid (DE)
(74) Vertreter: Patentanwälte Dörner & Kötter PartG mbB

(56) Entgegenhaltungen:
- EP-A1- 2 634 463
- DE-U1-202014 101 116
- FR-A3- 2 699 250
- US-A- 4 617 965
- US-A- 6 131 611
- US-A1- 2003 140 413

## Beschreibung

Die Erfindung betrifft eine Einhandhebelkartusche nach dem Oberbegriff des Patentanspruchs 1. Die Erfindung betrifft weiterhin eine Seiteneinhandhebelarmatur nach dem Patentanspruch 12. In Sanitärarmaturen werden häufig als Mischerkartuschen ausgeführte Einhandhebelkartuschen eingesetzt, in denen eine Steuerscheibe sowie eine Durchlassscheibe aufweisende Scheibensteuerung angeordnet ist, welche über einen einzigen Hebel derart bedienbar ist, dass sowohl die Wassermenge als auch die Wassertemperatur über ein und denselben Hebel steuerbar ist. Steuerscheibe und Durchlassscheibe sind dabei regelmäßig aus Keramik hergestellt. In einigen Anwendungsgebieten kommen auch modifizierte Kartuschen zum Einsatz, bei denen ein konstantes Mischungsverhältnis eingestellt ist, wobei die Drehbewegung des Hebels blockiert ist. Diese Ausführung kommt auch in solchen Anwendungsgebieten zum Einsatz, in denen nur ein Zulaufkanal in der Armatur vorhanden ist.

Mischerkartuschen der vorgenannten Art, wie sie beispielsweise in der EP 2634463 A1 beschrieben sind, haben sich in der Praxis bewährt. Die Keramikscheibensteuerung hat sich dabei als leichtgängig und zuverlässig erwiesen. Zunehmend kommt daher der Wunsch auf, diese Mischerkartusche auch in sogenannten Seitenarmaturen bzw. Seiteneinhandhebelarmaturen einzusetzen. Diese Armaturen sind derart ausgebildet, dass der Bedienhebel seitlich an dem Wasserauslauf angeordnet ist. Dabei hat sich als nachteilig erwiesen, dass diese Armaturen für den Einsatz der vorgenannten zuverlässigen und leichtgängigen Kartuschen sehr voluminös ausgeführt werden müssen, um die seitlich, im Wesentlichen orthogonal zum Wasserauslauf anzuordnende Kartusche unterbringen zu können.US6131611 offenbart eine Einhandhebelkartusche gemäß dem Oberbegriff des Anspruchs 1. Hier will die Erfindung Abhilfe schaffen. Der Erfindung liegt die Aufgabe zugrunde, eine Einhandhebelkartusche für den Einsatz in Seitenarmaturen bereitzustellen, bei der der erforderliche Einbauraum vermindert ist. Gemäß der Erfindung wird diese Aufgabe durch eine Einhandhebelkartusche mit den Merkmalen des kennzeichnenden Teils des Patentanspruchs 1 gelöst.

Mit der Erfindung ist eine Einhandhebelkartusche für den Einsatz in Seitenarmaturen geschaffen, bei der der erforderliche Einbauraum vermindert ist. Dadurch, dass der das Dichtelement aufnehmende durchmesservergrößerte Absatz an dem der Spindel abgewandten Seite an das Kopfstück angeformt ist, ist eine Montage in einer Seitenarmatur ermöglicht, bei der die Kartusche nur in geringem Maße in die Armatur eintaucht, wodurch der erforderliche Einbauraum vermindert ist. Dabei ist das Dichtelement bevorzugt durch einen O-Ring gebildet. Der Befestigungsring liegt hier nicht, wie im Stand der Technik bekannt, auf dem durchmesservergrößerten Absatz auf, sondern auf einer im oberen Bereich des Kopfstücks angeordneten Schulter.

In Weiterbildung der Erfindung ist der Befestigungsring hülsenförmig ausgebildet und weist eine Höhe auf, die im Wesentlichen der Höhe des Kopfstücks oberhalb des Absatzes entspricht. Hierdurch ist eine vollständige Ummantelung des Kopfstücks oberhalb des zur Abdichtung innerhalb des Ventilsitzes der Armatur zu positionierenden durchmesservergrößerten Absatzes erzielt, wodurch quasi eine Gehäuseerweiterung der Armatur erreicht ist. Dabei ist das Außengewinde bevorzugt an seinem dem durchmesservergrößerten Absatz zugewandten Ende des Befestigungsrings angeordnet

In Ausgestaltung der Erfindung sind in dem Bodenstück zumindest ein Einlasskanal, bevorzugt zwei Einlasskanäle sowie ein Auslasskanal eingebracht, wobei das Bodenstück einen axialen Absatz aufweist, durch den nur der wenigstens eine Einlasskanal, nicht jedoch der Auslasskanal geführt ist. Hierdurch ist ein Hohlraum zwischen der Kartusche und der Armatur im Bereich des Auslasskanals bewirkt, durch den ein seitlicher Auslauf aus der Armatur ermöglicht ist.

In Weiterbildung der Erfindung ist an dem Bodenstück zumindest bereichsweise umlaufend ein Absatz angeformt, auf dem das Kopfstück aufliegt. Hierdurch ist gewährleistet, dass die bei der Montage der Kartusche in dem Ventilsitz einer Armatur auftretenden Vorspannkräfte im Wesentlichen von dem Kopfstück auf das Bodenstück übertragen werden, wodurch die Vorspannkraft insbesondere nicht durch die Bauteile der Scheibensteuerung geleitet wird.

In weiterer Ausgestaltung der Erfindung sind Kopfstück und Befestigungsring aus Metall, vorzugsweise Messing hergestellt. Hierdurch ist eine Verformung von Kopfstück und Hülse durch die Vorspannung der Kartusche gegen die Armatur auch über einen langen Zeitraum verhindert.

In Weiterbildung der Erfindung ist die Spindel über eine Achse mit der Spindelaufnahme verbunden und das Kopfstück weist an seinem dem Bodenstück entgegengesetzten Ende einen durchmesserreduzierten Abschnitt auf, in dem diametral gegenüberliegend zwei radiale Langlöcher eingebracht sind, in welche die Achse eingreift. Der durchmesserreduzierte Abschnitt nimmt den Befestigungsring auf, der so von der Spindelaufnahme entkoppelt ist, wodurch eine ungewollte Mitnahme des Befestigungsrings beim Drehen der Spindelaufnahme bei Betätigung der Einhandhebelkartusche vermieden ist.

Vorteilhaft sind zwischen den Langlöchern zwei radial umlaufende Stege angeordnet, die bevorzugt einen gegenüber dem durchmesserreduzierten Abschnitt vergrößert ausgebildeten Durchmesser aufweisen. Vorteilhaft ist auf den Stegen jeweils wenigstens eine Rastnase zur verliersicheren Aufnahme eines Befestigungsrings angeordnet. Hierdurch ist eine gute Beweglichkeit des Befestigungsrings bei gleichzeitiger verliersicherer Halterung erzielt. Bevorzugt ist die Rastnase durch eine radial verlaufende, einen Hinterschnitt ausbildende Rastkante gebildet.

Der vorliegenden Erfindung liegt weiterhin die Aufgabe zugrunde, eine Seiteneinhandhebelarmatur mit einer Einhandhebelkartusche bereitzustellen, die weniger voluminös ausgeführt sind. Gemäß der Erfindung wird diese Aufgabe durch eine Seiteneinhandhebelarmatur mit den Merkmalen des Patentanspruchs **12** gelöst.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Einhandhebelmischerkartusche
a) in der Ansicht von unten;
b) in der Seitenansicht;
c) in der Draufsicht;
d) im Teillängsschnitt (mit angedeuteter Armatur);

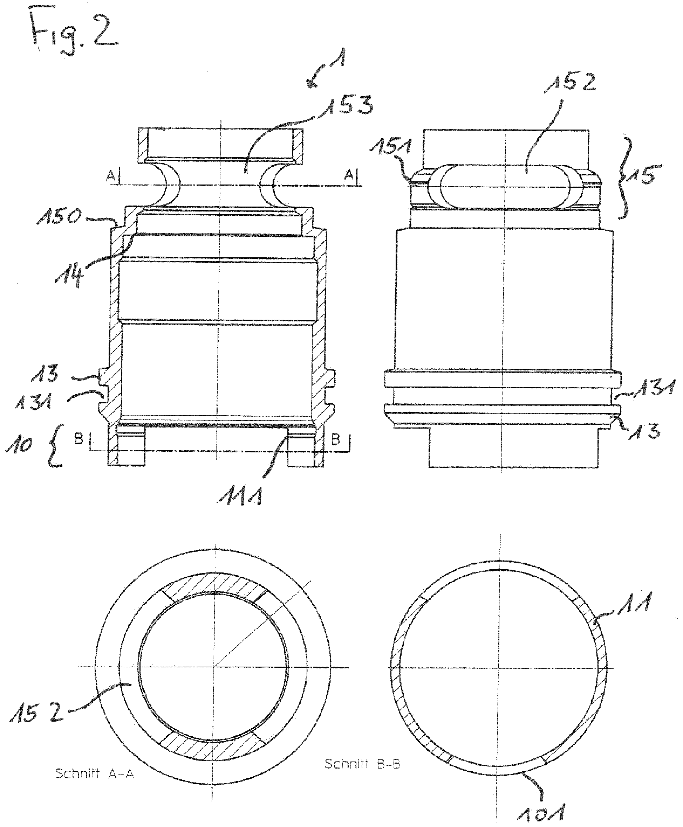

- Figur 2: die schematische Darstellung des Kopfstücks der Mischerkartusche aus Figur 1
a) im Längsschnitt;
b) in einer um 90° gedrehter Seitenansicht;
c) im Querschnitt (Schnitt A-A);
d) im Querschnitt (Schnitt B-B);

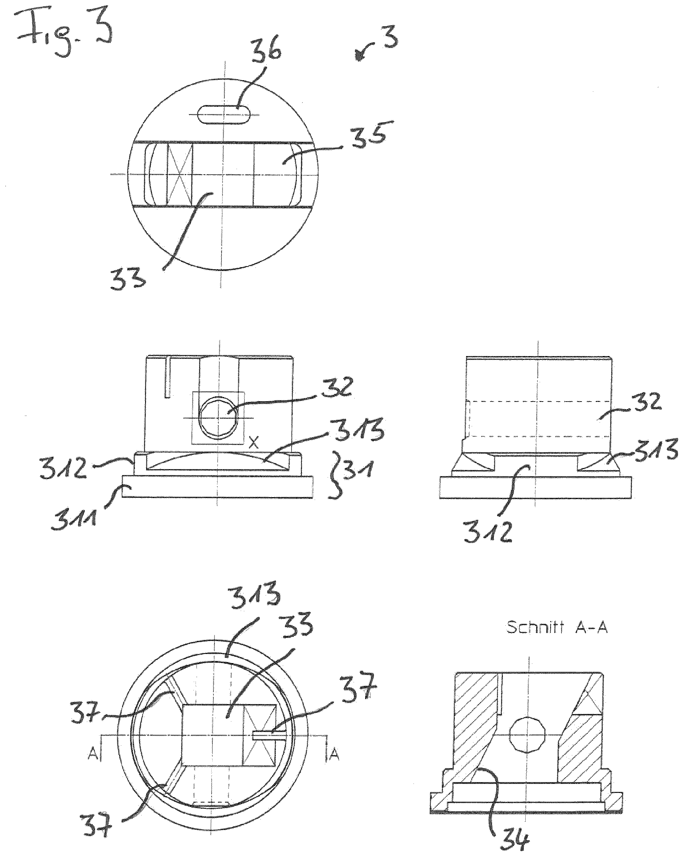

- Figur 3: die schematische Darstellung der Spindelaufnahme der Mischerkartusche aus Figur 1
a) in der Ansicht von unten;
b) in der Seitenansicht;
c) in einer um 90° verdrehten Seitenansicht;
d) in der Draufsicht;
e) im Längsschnitt (Schnitt A-A);

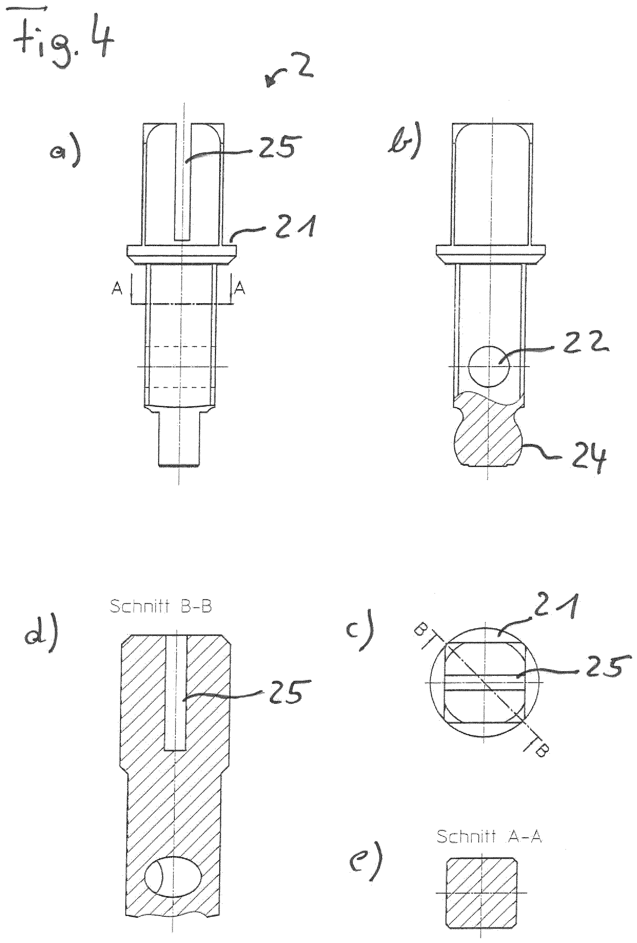

- Figur 4: die Spindel der Mischerkartusche aus Figur 1
a) in der Seitenansicht;
b) im Teilschnitt in um 90° gedrehter Seitenansicht;
c) in der Draufsicht;
d) im Längsschnitt (Schnitt B-B);
e) im Querschnitt (Schnitt A-A);

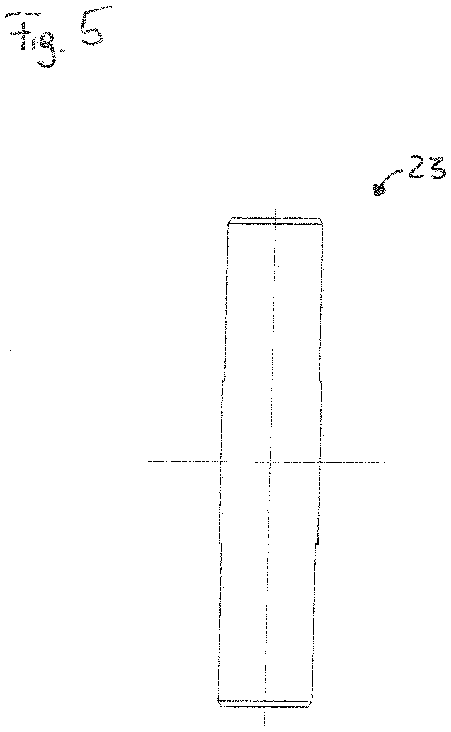

- Figur 5: die Schwenkachse der Spindel der Mischerkartusche aus Figur 1;

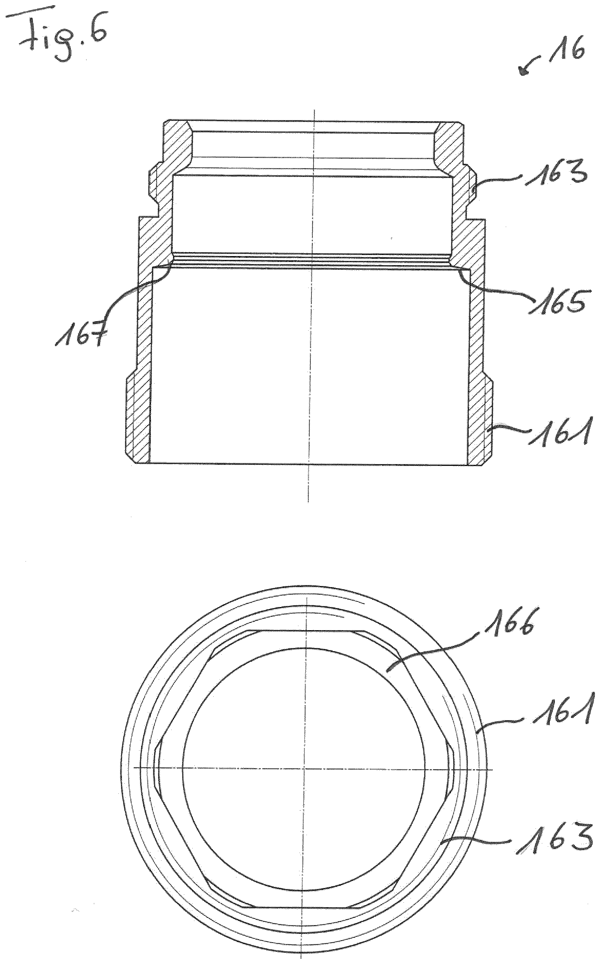

- Figur 6: den Befestigungsring der Mischerkartusche aus Figur 1
a) im Längsschnitt;
b) in der Draufsicht;

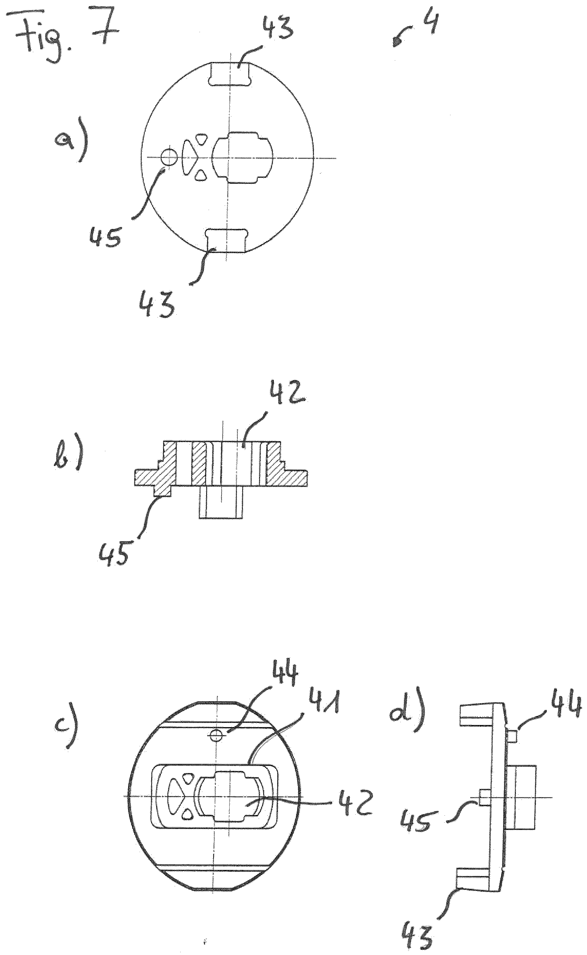

- Figur 7: die schematische Darstellung des Gleitstücks der Mischerkartusche aus Figur 1
a) in der Ansicht von unten;
b) im Querschnitt ;
c) in der Draufsicht;
d) in der Seitenansicht;

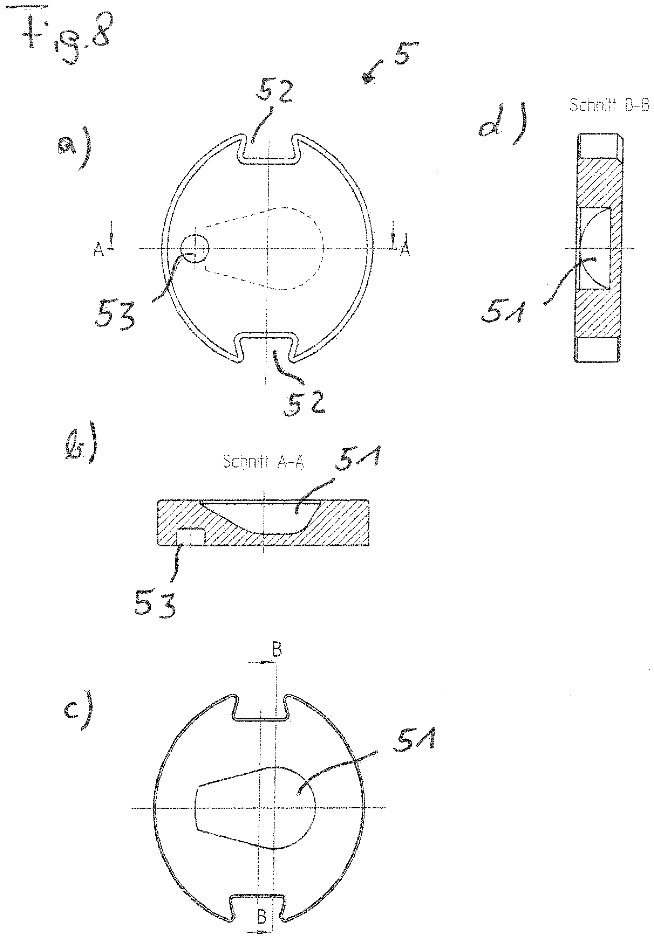

- Figur 8: die Darstellung der Steuerscheibe der Mischerkartusche aus Figur 1
a) in der Ansicht von unten;
b) im Querschnitt (Schnitt A-A);
c) in der Draufsicht;
d) im Querschnitt (Schnitt B-B);

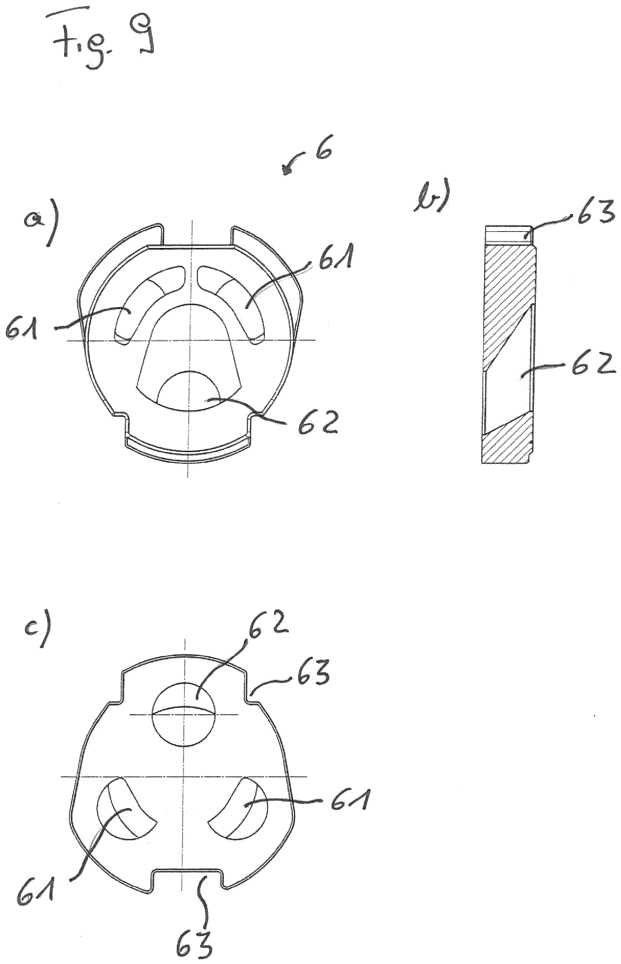

- Figur 9: die Darstellung der Durchlassscheibe der Mischerkartusche aus Figur 1
a) in der Ansicht von unten;
b) im Querschnitt;
c) in der Draufsicht;

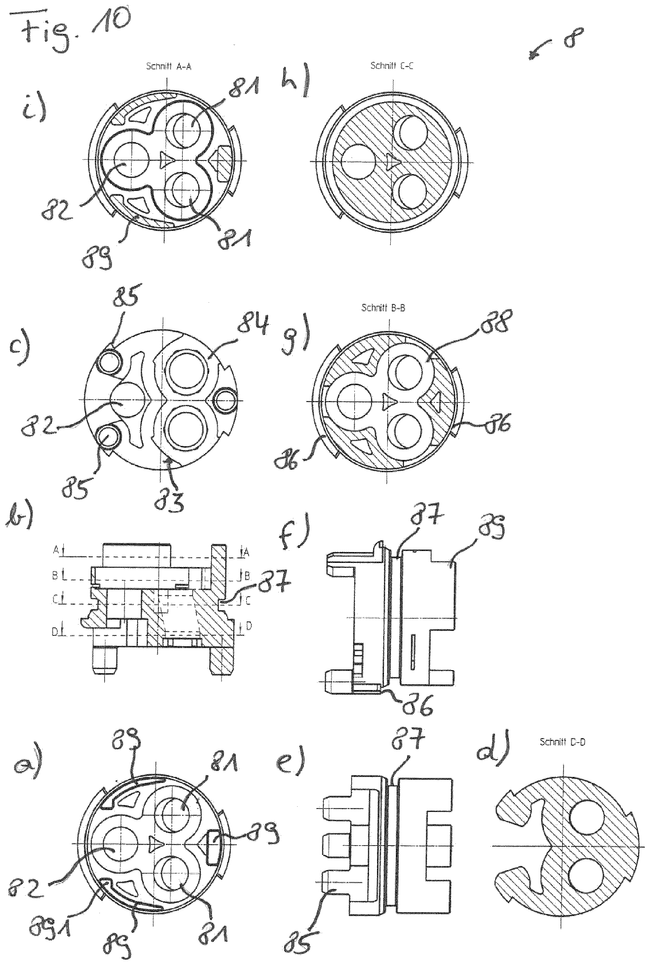

- Figur 10: die Darstellung des Bodenstücks des Mischerkartusche aus Figur 1
a) in der Draufsicht;
b) im Längsschnitt;
c) in der Ansicht von unten;
d) im Schnitt D-D der Darstellung aus b);
e) in der Seitenansicht;
f) in der Seitenansicht (um 90° verdreht);
g) im Schnitt B-B der Darstellung aus b)
h) im Schnitt C-C der Darstellung aus b)
i) im Schnitt A-A der Darstellung aus b)

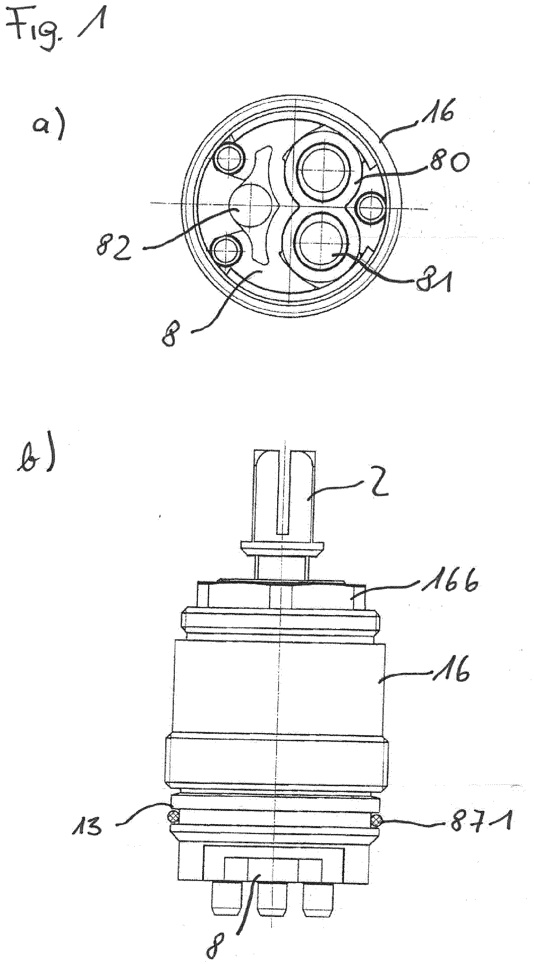

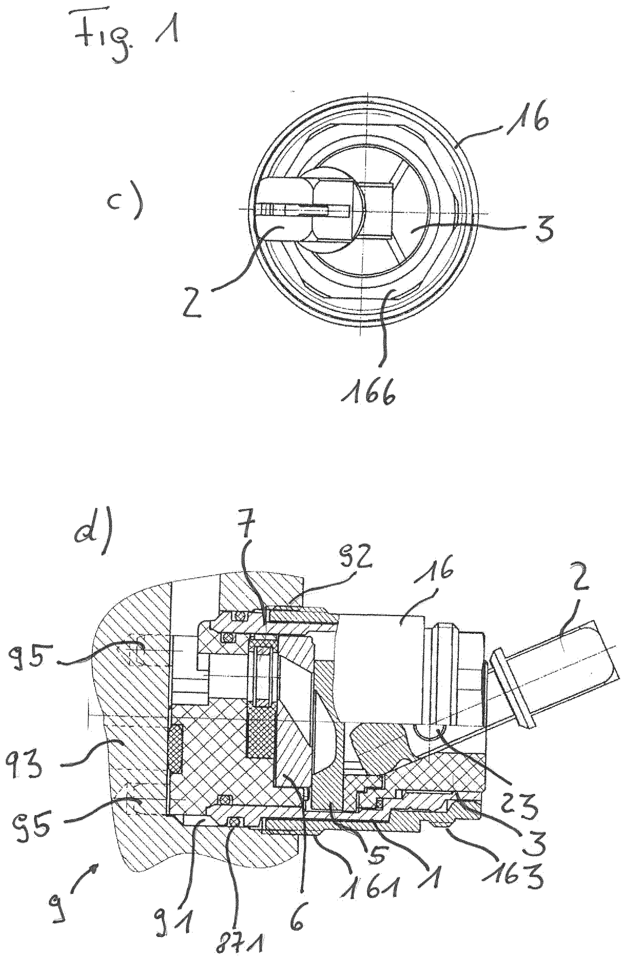

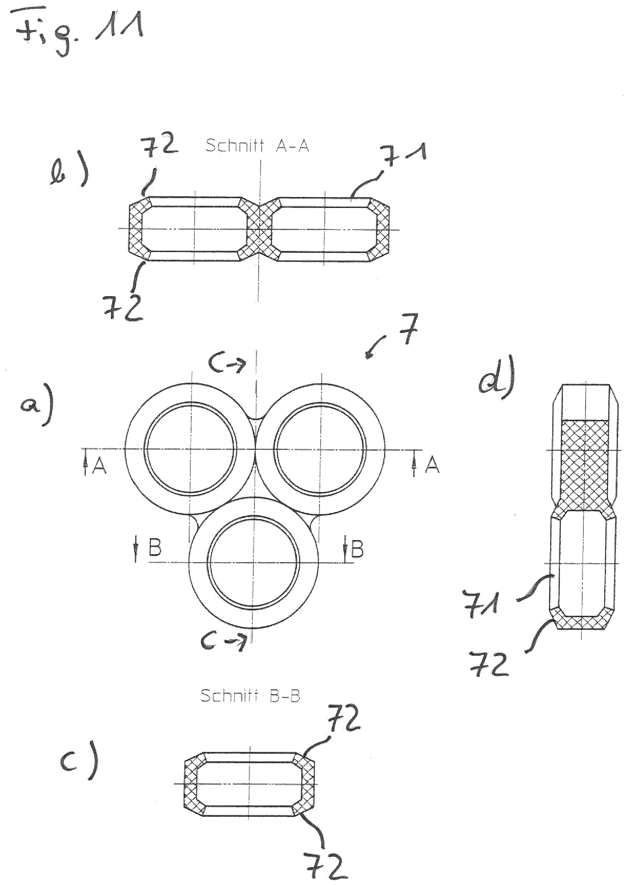

- Figur 11: die Darstellung des durchlassscheibenseitigen Lippendichtungsformteils der Mischerkartusche aus Figur 1
a) in der Draufsicht;
b) im Längsschnitt (Schnitt A-A);
c) im Längsschnitt (Schnitt B-B);
d) im Längsschnitt (Schnitt C-C);

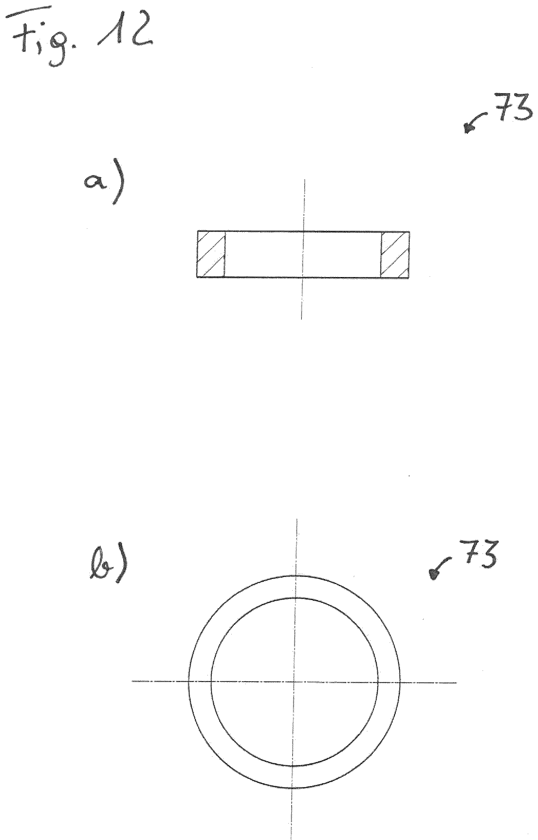

- Figur 12: die Darstellung des Stützrings des Lippendichtungsformteils der Mischerkartusche aus Figur 1
a) im Längsschnitt;
b) in der Draufsicht;

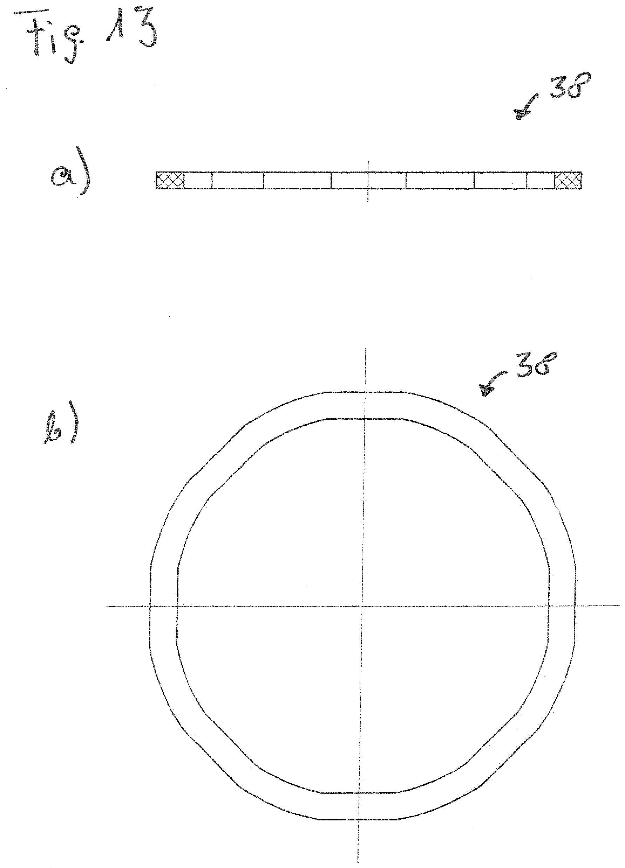

- Figur 13: die Darstellung des Gleitrings der Mischerkartusche aus Figur 1
a) im Längsschnitt;
b) in der Draufsicht;

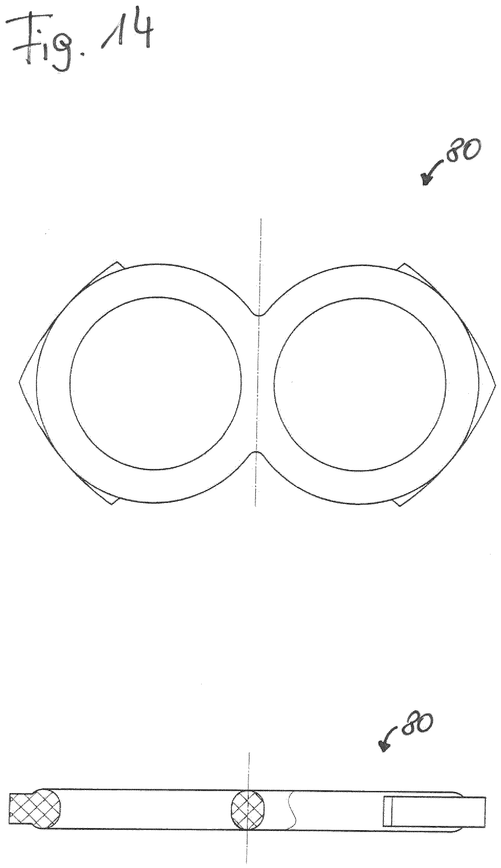

- Figur 14: die Darstellung des einlassseitigen Lippendichtungsformteils der Mischerkartusche aus Figur 1
a) in der Draufsicht;
b) im Querschnitt.

Die als Ausführungsbeispiel gewählte Einhandhebelmischerkartusche besteht im Wesentlichen aus einem Kopfstück 1, in das eine Spindel 2 axial hineinragt, die in einer drehbar gelagerten Spindelaufnahme 3 schwenkbar gelagert ist und die in ein Gleitstück 4 eingreift, das mit einer Steuerscheibe 5 verbunden ist, die mit einer Durchlassscheibe 6 korrespondiert, an die sich ein Bodenstück 8 anschließt, welches durchlassscheibenseitige ein Dichtungsformteil 7 und einlassseitig ein Dichtungsformteil 80 aufnimmt.

Das Kopfstück 1 ist hülsenartig ausgebildet und im Ausführungsbeispiel als Messingdrehteil hergestellt. An seinen dem Bodenstück 8 zugewandten endseitigen Abschnitt 10 sind in das Kopfstück 1 diametral zueinander zwei Ausnehmungen 101 eingebracht, durch die zwei bogenförmige Stege 11 gebildet sind, an deren Innenseite eine Rastnut 111 eingebracht ist. An seinem den Stegen 11 gegenüberliegenden Ende weist das Kopfstück 1 einen durchmesserreduzierten Abschnitt 15 auf, durch den eine umlaufende Schulter 150 ausgebildet ist und in dem diametral gegenüberliegend zwei radiale Langlöcher 152 eingebracht sind, welche der Drehbegrenzung der Spindelaufnahme 3 dienen. Zwisehen den Langlöchern 152 sind zwei radial umlaufende Stege 153 ausgebildet, die einen gegenüber dem durchmesserreduzierten Abschnitt 15 vergrößerten Außendurchmesser aufweisen. Auf den Stegen 153 ist jeweils eine Rastnase 151 in Form einer einen Hinterschnitt ausbildenden radialen Rastkante angeordnet. Die Rastnase 151 dient der verliersicheren Halterung des Befestigungsrings 16. Unterhalb des durchmesserreduzierten Abschnitts 15 ist an dem Kopfstück 1 innen ein Absatz 14 ausgebildet.

An seinem dem durchmesserreduzierten Abschnitt 15 gegenüberliegenden Ende weist das Kopfstück 1 außen einen umlaufenden, durchmesservergrößerten Absatz 13 auf, in den mittig umlaufend eine Nut 131 zur Aufnahme eines O-Rings 17 eingebracht ist.

Auf den durchmesserreduzierten Abschnitt 15 des Kopfstücks 1 ist weiterhin ein Befestigungsring 16 aufgestülpt. Der Befestigungsring 16 ist hülsenförmig ausgebildet und weist außen umlaufend ein Außengewinde 161 zum Einschrauben in eine Armatur auf. An seiner dem Außengewinde161 entgegengesetzten Seite ist an dem Befestigungsring 16 ein Außensechskant 166 angeformt. Unterhalb des Außensechskants 166 ist in dem Befestigungsring 16 ein zweites Außengewinde 163 eingebracht. Beabstandet zu dem zweiten Außengewinde 163 ist innen ein Absatz 165 gebildet, an den innen umlaufend eine Nase 167 angeformt ist.

Die Spindel 2 ist im Ausführungsbeispiel im Wesentlichen quaderförmig ausgebildet. Etwa mittig ist an der Spindel 2 eine kreisringförmige koaxiale Anformung 21 zur Aufnahme eines - nicht dargestellten - Bedienteils angeformt. Oberhalb der Anformung 21 ist in die Spindel 2 ein bis zu der Anformung 21 geführter Schlitz 25 eingebracht. Unterhalb der Anformung 21 ist durch die Spindel 2 eine Bohrung 22 zur Aufnahme eines Achsstiftes 23 eingebracht. Endseitig ist an die Spindel 2 ein in Form einer Kugelscheibe ausgebildeter Steuerkopf 24 angeformt, der an seiner dem Gleitstück 4 zugewandten Seite abgeflacht ausgebildet ist.

Die Spindelaufnahme 3 ist als im Wesentlichen zylinderförmiges Kunststoffspritzgussteil ausgebildet. An seinem dem Gleitstück 4 zugewandten Ende ist an der Spindelaufnahme 3 ein zweistufiger Absatz 31 angeformt, dessen Kontur der Innenkontur des zweistufigen Absatzes 14 des Kopfstücks 1 entspricht, an der dieser anliegt. Der oberhalb des endseitigen ersten Absatzes 311 angeordnete, gegenüber diesem durchmesserreduziert ausgebildete zweite Absatz 312 des zweistufigen Absatzes 31 ist im Bereich der beiden Längsseitenwände des rechteckigen Querschnitts der Durchführung 33 axial schräg nach innen zulaufend ausgebildet, sodass unterhalb der Durchgangsbohrung 32 zwei konusabschnittartige Schrägen 313 gebildet sind. Der zweite Absatz 312 weist hierdurch in der Draufsicht eine hammerkopfförmige Kontur auf. Auf dem ersten Absatz 311 ist ein Gleitring 38 angeordnet. Der Gleitring 38 weist eine polygonale Außenkontur auf, die im Ausführungsbeispiel zwölfeckig ausgebildet ist. Der Außendurchmesser dieser polygonalen Außenkontur ist dabei geringfügig größer als der Außendurchmesser des ersten Absatzes 311, dessen Außendurchmesser wiederum geringfügig kleiner dimensioniert ist, als der Innendurchmesser des Absatzes 14 des Kopfstücks 1.

Oberhalb des zweitstufigen Absatzes 31 ist durch die Spindelaufnahme 3 eine radiale Durchgangsbohrung 32 zur Aufnahme des Achsstiftes 23 für die Spindel 2 eingebracht. Die Durchgangsbohrung 32 weist einen polygonalen Querschnitt auf, der im Ausführungsbeispiel als Zehneck ausgebildet ist. Axial ist durch die Spindelaufnahme 3 eine Durchführung 33 für die Spindel 2 angeformt, welche seitliche Anschläge 34 aufweist, durch die der Schwenkradius der Spindel 2 um den Achsstift 23 begrenzt ist. Die Durchführung 33 weist einen im Wesentlichen rechteckigen Querschnitt auf. An zwei eine Querseite des rechteckigen Querschnitts begrenzenden Ecken ist in die Spindelaufnahme jeweils ein einen Spalt ausbildender Schlitz 37 angeordnet, der sich in einem stumpfen Winkel zur Querseite nach außen erstreckt und der oberhalb einer durch die Mittelachse der Durchgangsbohrung 32 gedachten horizontalen Ebene endet. Ein dritter Schlitz 37 verläuft auf der Längsmittelachse des rechteckförmigen Querschnitts der Durchführung 33 von der den vorgenannten beiden Schlitzen 37 gegenüberliegend angeordneten Querseite nach außen.

Die Durchführung 33 mündet in einer im Wesentlichen quaderförmig ausgebildeten Aufnahme 35 für das Gleitstück 4. Beabstandet zu der Aufnahme 35 ist in der Spindelaufnahme 3 eine im Wesentlichen ovale Einbuchtung 36 zur Aufnahme des Führungsstiftes 44 des Gleitstücks 4 eingebracht.

Das als Kunststoffspritzgussteil ausgeführte Gleitstück 4 ist im Wesentlichen in Form einer Kreisscheibe ausgebildet, auf der ein im Wesentlichen quaderförmiges Formstück 41 angeformt ist. Das Formstück 41 ist derart ausgebildet, dass es innerhalb der Aufnahme 35 der Spindelaufnahme 3 in Längsrichtung verschiebbar und in Querrichtung geführt ist. Axial ist durch das Gleitstück 4 das Formstück 41 durchdringend ein Langloch 42 zur Aufnahme des Steuerkopfes 24 der Spindel 2 eingebracht. Seitlich des Formstücks 41 ist ein Führungsstift 44 zum Eingriff in die Einbuchtung 36 der Spindelaufnahme 3 angeformt. An seiner dem Formstück 41 entgegen gerichteten Unterseite sind an dem Gleitstück 4 außen gegenüberliegend zwei axiale Stege 43 zur Aufnahme der Steuerscheibe 5 angeformt. Weiterhin ist an der Unterseite ein Passstift 45 zum Eingriff in die Passbohrung 53 der Steuerscheibe 5 angeformt, wodurch eine lagegerechte Orientierung der Steuerscheibe 5 bei der Montage gewährleistet ist.

Die Steuerscheibe 5 ist oval ausgebildet und als Keramikteil hergestellt. Auf ihrer der Durchlassscheibe 6 zugewandten Seite weist die Steuerscheibe eine mittig angeordnete, eiförmige Einbuchtung 51 auf. Auf ihrer der Einbuchtung 51 entgegen gesetzten Oberseite sind in der Steuerscheibe 5 diametral zueinander außen zwei Ausnehmungen 52 zur Aufnahme der Stege 23 des Gleitstücks 4 eingebracht. Weiterhin ist in der Steuerscheibe 5 an ihrer dem Gleitstück 4 zugewandten Seite eine Passbohrung 53 eingebracht. Über die Ausnehmungen 52 sowie die Passbohrung 53 ist die Steuerscheibe 5 mit dem Gleitstück 4 formschlüssig verbunden.

Die Durchlassscheibe 6 ist ebenfalls als Keramikteil ausgeführt. Durch die Durchlassscheibe 6 sind zwei Einlasskanäle 61 für kaltes bzw. warmes Wasser sowie ein relativ zu diesen vergrößert ausgebildeter Auslasskanal 62 für das Mischwasser eingebracht. Die Einlasskanäle 61 sowie der Auslasskanal 62 sind schräg zur Durchlassscheibe 6 durch diese hindurch geführt. Seitlich sind an der Durchlassscheibe 6 versetzt zueinander drei Aussparungen 63 zur formschlüssigen Verbindung mit dem Bodenstück 8 eingebracht.

Das Dichtungsformteil 7 ist im Ausführungsbeispiel aus Gummi hergestellt. Es ist im Wesentlichen durch drei Ringe 71 gebildet, die jeweils an den beiden übrigen Ringen 71 angeformt sind, sodass eine kleeblattartige Kontur gebildet ist. An den Ringen 71 des Dichtungsformteils 7 sind an deren Oberseite sowie an deren Unterseite jeweils Dichtlippen 72 angeformt. Zur Formstabilisierung sind die Ringe 71 jeweils mit einem Stützring 73 versehen, welche zwischen den Dichtlippen 72 der Ringe 71 angeordnet ist.

Das Bodenstück 8 ist im Wesentlichen zylinderförmig ausgebildet. In dem Bodenstück 8 sind zwei Einlassbohrungen 81 sowie eine Auslassbohrung 82 eingebracht, deren Mittelachsen ein gleichschenkliges Dreieck begrenzen. Die beiden Einlassbohrungen 81 münden in einen brillenartig ausgeformten Absatz 83, in den die Einlassbohrungen 81 umrandend eine Nut 84 zur Aufnahme eines brillenförmigen Dichtungsformteils 80 eingebracht ist. Bodenseitig sind weiterhin zwei Stützfüße 85 an dem Bodenstück 8 angeformt.

Seitlich ist an dem Bodenstück 8 umlaufend eine Nut 87 zur Aufnahme eines O-Rings 871 zur Abdichtung des Bodenstücks 8 gegenüber dem Kopfstück 1 eingebracht. Unterhalb der Nut 87 ist ein bereichsweise umlaufender Absatz 86 zur Anlage des Kopfstücks 1 angeformt. Auf seiner dem Absatz 83 gegenüberliegenden Oberseite weist das Bodenstück 8 eine kleeblattartige Aufnahme 88 für das Dichtungsformteil 7 auf. Umlaufend der Aufnahme 88 sind gleichmäßig beabstandet zueinander drei Stege 89 zur drehfesten Aufnahme der Durchlassscheibe 6 angeformt. Die Stege 89 greifen in die Aussparungen 63 der Durchlassscheibe 6 ein. Zur Verbesserung des Formschlusses sind an zwei Stegen 89 Nasen 891 angeformt, welche in hierzu korrespondierende Aussparungen 63 der Durchlassscheibe 6 eingreifen.

Die Seiteneinhandhebelarmatur 9, die in Figur 1 lediglich schematisch angedeutet ist, weist seitlich eine Kartuschenaufnahme 91 auf, an deren offenen Ende ein Innengewinde 92 zum Einschrauben des Befestigungsrings 16 des Kopfstücks 1 eingebracht ist. In die Kartuschenaufnahme 91 münden bodenseitig zwei Wasserzulaufanschlüsse 93. Ortogonal zur Mittelachse der Wasserzulaufleitungen mündet eine Wasserablaufleitung 94 in die Kartuschenaufnahme 91. Weiterhin sind beidseitig der Wasserzulaufanschlüsse 93 Positionierbohrungen 95 zur Aufnahme der Positionierstifte 852 des Bodenstücks 8 eingebracht.

Im montierten Zustand ist der Befestigungsring 16 auf den durchmesserreduzierten Abschnitt 15 des Kopfstücks 1 übergestülpt, wobei die Rastnase 151 bei Passieren der umlaufenden Nase 167 des Befestigungsrings 16 elastisch nach innen gezwängt wird. Nach Passieren der Nase 167 des Befestigungsrings 116 nimmt die Rastnase 151 des durchmesserreduzierten Abschnitts 15 des Kopfstücks 1 ihre ursprüngliche Position wieder ein. Der Befestigungsring 16 ist somit verliersicher an dem Kopfstück 1 gehalten. Das Einschrauben des Befestigungsrings 16 in den Ventilsitz 91 der Armatur 9 erfolgt über den Außensechskant 166 wodurch über die Schulter 150 Vorspannkräfte auf das Kopfstück 1 eingeleitet werden. Dabei liegt das Kopfstück 1 endseitig auf dem bereichsweise umlaufenden Absatz 86 des Bodenstücks 8 auf, wodurch die Vorspannkräfte nahezu vollständig über das Kopfstück 1 auf das Bodenstück übertragen werden. Der mit dem brillenförmigen Dichtungsformteil 80 versehene Absatz 83 wird so abdichtend gegen die Wasserzulaufanschlüsse 93 gedrückt.

## Patentansprüche

1. Einhandhebelkartusche für den Einsatz in einer Seitenarmatur, umfassend ein hülsenartig ausgebildetes Kopfstück (1), das ein Bodenstück (8) aufnimmt, sowie eine Scheibensteuerung mit einer Steuerscheibe (5), welche über eine in einer Spindelaufnahme (3) drehbar und/ oder schwenkbar gelagerte Spindel (2) relativ zu einer drehfest angeordneten Durchlassscheibe (6) drehbar und/oder verschiebbar angeordnet ist, wobei an dem Kopfstück ein durchmesservergrößerter Absatz (13) angeformt ist, in den umlaufend eine Nut zur Aufnahme eines Dichtelements eingebracht ist, wobei ein mit einem Außengewinde (161) zum Einschrauben in die Seitenarmatur versehener Befestigungsring (16) auf das Kopfstück (1) aufgestülpt ist, **dadurch gekennzeichnet, dass** der durchmesservergrößerte Absatz (13) an dem der Spindel (2) abgewandten Ende an das Kopfstück (1) angeformt ist, so dass eine Montage in der Seitenarmatur ermöglicht ist, bei der die Einhandhebelkartusche nur in geringem Maße in die Seitenarmatur eintaucht, wobei der Befestigungsring (16) hülsenförmig ausgebildet ist und eine Höhe aufweist, die im Wesentlichen der Höhe des Kopfstücks (1) oberhalb des Absatzes (13) entspricht.

2. Einhandhebelkartusche nach Anspruch 1, **dadurch gekennzeichnet, dass** das Dichtelement durch einen O-Ring (17) gebildet ist.

3. Einhandhebelkartusche nach Anspruch 1 oder 2, dadurch gekennzeich net, dass das Außengewinde (161) an seinem dem durchmesservergrößerten Absatz (13) zugewandten Ende des Befestigungsrings (16) angeordnet ist.

4. Einhandhebelkartusche nach einem der vorgenannten Ansprüche, **dadurch gekennzeichnet, dass** in dem Bodenstück (8) wenigstens ein Einlasskanal (81) und ein Auslasskanal (82) eingebracht sind, wobei das Bodenstück (8) einen axialen Absatz (83) aufweist, durch den nur der wenigstens eine Einlasskanal (81) geführt ist.

5. Einhandhebelkartusche nach einem der vorgenannten Ansprüche, **dadurch gekennzeichnet, dass** an dem Bodenstück (8) zumindest bereichsweise umlaufend ein Absatz (86) angeformt ist, auf dem das Kopfstück (1) aufliegt.

6. Einhandhebelkartusche nach einem der vorgenannten Ansprüche, **dadurch gekennzeichnet, dass** Kopfstück (1) und Befestigungsring (16) aus Metall, vorzugsweise Messing hergestellt sind.

7. Einhandhebelkartusche nach einem der vorgenannten Ansprüche, **dadurch gekennzeichnet, dass** die Spindel (2) über eine Achse (23) mit der Spindelaufnahme (3) verbunden ist, wobei das Kopfstück (1) an seinem dem Bodenstück (8) entgegen gesetzten Ende einen durchmesserreduzierten Abschnitt (15) aufweist, in dem diametral gegenüberliegend zwei radiale Langlöcher (152) eingebracht sind, in welche die Achse (23) eingreift.

8. Einhandhebelkartusche nach Anspruch 7, **dadurch gekennzeichnet, dass** durch den durchmesserreduzierten Abschnitt (15) eine umlaufende Schulter 150 gebildet ist, auf der der Befestigungsring 16 aufliegt.

9. Einhandhebelkartusche nach Anspruch 7 oder 8, **dadurch gekennzeichnet, dass** zwischen den Länglöchern (152) zwei radial umlaufende Stege (153) angeordnet sind, die bevorzugt einen gegenüber dem durchmesserreduzierten Abschnitt (15) vergrößert ausgebildeten Außendurchmesser aufweisen.

10. Einhandhebelkartusche nach Anspruch 9, **dadurch gekennzeichnet,dass** auf den Stegen (153) jeweils wenigstens eine Rastnase (151) zur verliersicheren Halterung des Befestigungsrings (16) angeordnet ist.

11. Einhandhebelkartusche nach Anspruch 10, **dadurch gekennzeichnet, dass** die Rastnase (151) durch eine radial verlaufende, einen Hinterschnitt ausbildende Rastkante gebildet ist.

12. Seiteneinhandhebelarmatur, umfassend ein Gehäuse mit einem seitlich angeordneten Ventilsitz, in dem wenigstens eine Wasserzulaufleitung und eine zu der wenigstens einen Wasserzulaufleitung orthogonal angeordnete Wasserablaufleitung münden, wobei in dem Ventilsitz eine Einhandhebelkartusche nach einem der vorgenannten Ansprüche angeordnet ist, die über den Befestigungsring (16), der mit seinem Außengewinde (161) mit einem an dem Ventilsitz angeordneten Innengewinde verschraubt ist, befestigt ist.

## Claims

1. Single hand lever cartridge for use in a side valve, comprising a headpiece (1) formed in the style of a sleeve which accommodates a base unit (8) as well as a disc control with a control disc (5) which via a rotating and/or swivelling spindle (2) mounted in spindle locator (3) can rotate and/or swivel relative to a non-rotatable outlet washer (6), whereby a diameter-enlarged ridge (13) has been formed on the headpiece in which a surrounding groove has been made for the introduction of a sealing element, whereby a fastening ring (16) with outer thread (161) intended for screwing into the side valve has been pushed onto the headpiece (1), **characterized in that** the diameter-enlarged ridge (13) on which the end facing away from the spindle (2) has been formed on the headpiece (1), so that an installation in the side valve is possible, whereby the single hand lever cartridge only protrudes to a small extent into the side valve, whereby the fastening ring (16) is formed as a sleeve and is of a height which largely corresponds to the height of the headpiece above the ridge (13).

2. Single hand lever cartridge according to claim 1, **characterized in that** the sealing element is formed as an O-ring (17).

3. Single hand lever cartridge according to claim 1 and 2, **characterized in that** the outer thread (161) is located at the end of the fastening ring (16) facing the diameter-enlarged ridge (13).

4. Single hand lever cartridge according to one of the aforementioned claims, **characterized in that** at least one inlet channel (81) and one outlet channel (82) are located in the base unit (8), whereby the base unit (8) has an axial ridge (83) through which at least only the one inlet channel (81) is fed.

5. Single hand lever cartridge according to one of the aforementioned claims, **characterized in that** on the base unit (8) a ridge (86) has been formed circumferentially at least in certain areas and upon which the headpiece (1) rests.

6. Single hand lever cartridge according to one of the aforementioned claims, **characterized in that** the headpiece (1) and fastening right (16) are made of metal and preferably of brass.

7. Single hand lever cartridge according to one of the aforementioned claims, **characterized in that** the spindle (2) is connected with the spindle locator (3) via an axle (23), whereby the headpiece (1) has a diameter-reduced section (15) at the opposite end to the base unit (8) and in which two diametrically opposed radial oblong holes (152) have been inserted and into which the axle (23) engages.

8. Single hand lever cartridge according to claim 7, **characterized in that** a circumferential shoulder (150) has been formed through the diameter-reduced section (15) upon which the fastening ring (16) rests.

9. Single hand lever cartridge according to claim 7 or 8, **characterized in that** two radially circumferential stays (153) are positioned between the oblong holes (152) which preferably have an enlarged-shaped outer diameter opposite the diameter reduced section (15).

10. Single hand lever cartridge according to claim 9, **characterized in that** at least one locking catch (151) is located on each of the stays (153) to ensure loss-proof retention of the fastening rings (16).

11. Single hand lever cartridge according to claim 10, **characterized in that** the locking catch (151) is formed by a radially oriented indentation-forming resting edge.

12. Single hand lever cartridge comprising a housing with a laterally positioned valve seat into which merge at least one water supply pipe and at least one water outlet pipe orthogonally oriented to a water supply pipe whereby a single hand lever cartridge according to one of the aforementioned claims is mounted in the valve seat and which is fastened by a fastening ring (16) which is screwed by its outer thread (161) into an inner thread located in the valve seat.

## Revendications

1. Cartouche de mitigeur destinée à être mise en oeuvre dans une robinetterie latérale, comprenant une partie de tête (1) en forme de douille accueillant une partie de fond (8), ainsi qu'une commande par disque de réglage (5), disposée, par l'intermédiaire d'une broche (2) reposant dans un accueil de broche (3) de manière à pouvoir tourner et/ou pivoter, de manière à pouvoir tourner et/ou pivoter relativement par rapport à un disque de passage fixe (6), un épaulement (13) de diamètre augmenté étant formé sur la pièce de tête, épaulement dans lequel est aménagée sur tout le pourtour une rainure permettant l'accueil d'un élément d'étanchéité, une bague de fixation (16), munie d'un filetage extérieur (161) permettant le vissage dans la robinetterie latérale, étant enfoncée sur la pièce de tête, **caractérisée en ce que** l'épaulement (13) de diamètre augmenté est moulé sur la pièce de tête (1) sur l'extrémité opposée à la broche (2), ceci permettant le montage dans la robinetterie latérale dans le cas de laquelle la cartouche de mitigeur ne plonge que peu dans la robinetterie latérale, la bague de fixation (16) étant en forme de douille et présentant une hauteur correspondant pour l'essentiel à la hauteur de la pièce de tête (1) au-dessus de l'épaulement (13).

2. Cartouche de mitigeur selon la revendication 1, **caractérisée en ce que** l'élément d'étanchéité est un joint torique (17).

3. Cartouche de mitigeur selon la revendication 1 ou 2, **caractérisée en ce que** le filetage extérieur (161) est situé à l'extrémité de la bague de fixation (16) tournée vers l'épaulement (13) de diamètre augmenté.

4. Cartouche de mitigeur selon l'une des revendications ci-dessus, **caractérisée en ce que** au moins un conduit d'admission (81) et un conduit de sortie (82) sont introduits dans la pièce de fond (8), la pièce de fond présentant un épaulement axial (83) par lequel passe seulement le conduit d'admission (81) au moins existant.

5. Cartouche de mitigeur selon l'une des revendications ci-dessus, **caractérisée en ce que** un épaulement (86), sur lequel repose la pièce de tête (1), est moulé à la pièce de fond (8) au moins sur des parties du pourtour.

6. Cartouche de mitigeur selon l'une des revendications ci-dessus, **caractérisée en ce que** la pièce de tête (1) et la bague de fixation (16) sont réalisées en métal, de préférence en laiton.

7. Cartouche de mitigeur selon l'une des revendications ci-dessus, **caractérisée en ce que** la broche (2) est reliée à l'accueil de broche (3) par un axe (23), la pièce de tête (1) présentant à son extrémité opposée à la pièce de fond (8) une section (15) à diamètre réduit, dans laquelle sont aménagés deux trous oblongs (152) radiaux diamétralement opposés, dans lesquels prend l'axe (23).

8. Cartouche de mitigeur selon la revendication 7, **caractérisée en ce que** un épaulement 150 est formé sur le pourtour par la section (15) à diamètre réduit, épaulement sur lequel repose la bague de fixation 16.

9. Cartouche de mitigeur selon l'une des revendications 7 ou 8, **caractérisée en ce que** deux baguettes (153) radiales sur le pourtour sont placées entre les trous oblongs (152), baguettes présentant de préférence un diamètre extérieur plus grand par rapport à la section (15) à diamètre réduit.

10. Cartouche de mitigeur selon la revendication 9, **caractérisée en ce que** respectivement au moins un ergot (151) est placé sur les baguettes (153) pour le maintien de manière imperdable de la bague de fixation (16).

11. Cartouche de mitigeur selon la revendication 10, **caractérisée en ce que** l'ergot (151) est formé par un bord d'arrêt radial formant une contre-dépouille.

12. Mitigeur mono-commande latéral, comprenant un boîtier avec un siège de robinet placé latéralement, dans lequel aboutissent au moins une conduite d'arrivée d'eau et une conduite d'écoulement d'eau agencée orthogonalement par rapport à l'au moins une conduite d'arrivée d'eau, une cartouche de mitigeur selon l'une des revendications ci-dessus étant placée dans le siège de robinet, laquelle est fixée par l'intermédiaire de la bague de fixation (16), vissée par son filetage extérieur (161) à un filetage intérieur situé sur le siège de robinet.
